Europäisches Patentamt

European Patent Office

Office européen des brevets

(11) Veröffentlichungsnummer: **0 230 022**
**B1**

(12) **EUROPÄISCHE PATENTSCHRIFT**

(45) Veröffentlichungstag der Patentschrift:
08.03.89

(21) Anmeldenummer: **86117761.6**

(22) Anmeldetag: **19.12.86**

(51) Int. Cl.⁴: **B 60 K 17/356**

(54) Antriebseinrichtung für Kraftfahrzeuge, insbesondere Personenkraftwagen.

(30) Priorität: 20.12.85 DE 3545481

(43) Veröffentlichungstag der Anmeldung:
29.07.87 Patentblatt 87/31

(45) Bekanntmachung des Hinweises auf die Patenterteilung:
08.03.89 Patentblatt 89/10

(84) Benannte Vertragsstaaten:
AT CH DE ES FR GB IT LI SE

(56) Entgegenhaltungen:
DE-A-3 435 662
DE-A-3 506 155
DE-B-111 363
DE-C-1 159 279
FR-A-2 469 296
FR-A-2 547 544
GB-A-791 903
US-A-3 865 207
US-A-4 236 595

ATZ 87(1985), Seiten 581-584

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Regar, Karl- Nikolaus, Dr.- Ing., Rebhuhnweg 3, D-8000 München 60 (DE)**
Erfinder: **Werner, Jürgen, Dipl.- Ing., Prof. Angermair Ring 24, D-8046 Garching (DE)**

(74) Vertreter: **Draeger, Karlfried, Bayerische Motoren Werke Aktiengesellschaft Postfach 40 02 40 Petuelring 130 - AJ 36, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Antriebseinrichtung für Kraftfahrzeuge, insbesondere Personenkraftwagen, nach dem Oberbegriff des Patentanspruchs 1.

Eine derartige Antriebseinrichtung dient dem Allradantrieb. Neben permanenten Allradantrieben sind sogenannte zu- und abschaltbare Allradantriebe, bei denen ebenso wie bei den permanenten Allradantrieben jeweils eine mechanische Antriebsübertragung zwischen dem Fahrzeugmotor und den Fahrzeugrädern vorgesehen ist, in einer Vielzahl von Ausführungen bekannt (Preukschat, Fahrwerktechnik: Antriebsarten, Vogel-Buchverlag, Würzburg, 1985, insbesondere Seiten 100 - 126; DE-Zeitschrift Auto, Motor und Sport, Heft 8/1983 vom 20.04.1983, Seiten 12 - 17 Artikel "Quattrophonie" und Seiten 22 - 25 Artikel "Allrad im Alltag"; DE-Zeitschrift Auto, Motor und Sport, Heft 19/1985 vom 18.09.1985, Seiten 69 - 76 Artikel "Das große 4 x 4"; DE-A 34 41 076). Alle diese bekannten Allradantriebe erfordern einen erheblichen Aufwand.

Eine Antriebseinrichtung der eingangs genannten Art, bei welcher nicht wie bei den vorerwähnten bekannten Antriebseinrichtungen eine mechanische Antriebsübertragung zwischen dem Fahrzeugmotor und den Fahrzeugrädern vorgesehen, sondern der Zusatzantrieb als hydrostatischer Einzelradantrieb ausgebildet ist, ist aus der GB-A 791 903 bekannt. Bei dieser bekannten Antriebseinrichtung sind die Hydromotoren in Draufsicht neben den Fahrzeug-Vorderrädern vorgesehen.

Ferner ist eine derartige Antriebseinrichtung, die insbesondere dem Antrieb von Lastkraftwagen dient, aus der DE-AS 3 305 437 bekannt. Auch bei dieser bekannten Antriebseinrichtung sind die Hydromotoren neben den Fahrzeugrädern angeordnet. Ein Lastkraftwagen, der mit dieser bekannten Antriebseinrichtung ausgestattet ist, soll auf Straßen mit abgeschaltetem Zusatzantrieb und bei Geländeeinsatz mit zugeschaltetem Zusatzantrieb, also mit Allradantrieb, betrieben werden.

Aus der DE-C-1 159 279 ist eine weitere Antriebseinrichtung dieser Art bekannt, die bei einem Kraftfahrzeug eingesetzt ist, das einen vorderen Rahmenteil und einen hinteren Rahmenteil aufweist, die um eine senkrechte Achse schwenkbar miteinander verbunden sind. Zur Lenkung des Fahrzeuges werden der vordere und der hintere Rahmenteil um die Gelenkachse relativ zueinander geschwenkt. Der vordere Rahmenteil trägt den Fahrzeugmotor, eine Kupplung, ein Getriebe, ein Differentialgetriebe und Achswellen für zwei Fahrzeug-Vorderräder sowie eine Hydro-Verstellpumpe, die auf der von der Kupplung und dem Getriebe abgewandten Seite des Fahrzeugmotors angeordnet und von diesem antreibbar und deren Fördermenge mittels eines Handhebels einstellbar ist. Der hintere Rahmenteil trägt zwei Fahrzeug-Hinterräder, für deren Antrieb jeweils ein neben dem Hinterrad mit Abstand von diesem angeordneter Hydromotor, ein an die Nabe des Hinterrades anschließendes ins Langsame übersetzendes Vorgelegegetriebe und zwischen Hydromotor und Vorgelegegetriebe eine Freilaufkupplung vorgesehen sind. Die Freilaufkupplungen können umgeschaltet werden, um einen Zusatzantrieb in der jeweils eingestellten Vorwärts- oder Rückwärtsfahrtrichtung zu ermöglichen. Neben der Hydro-Verstellpumpe ist eine ebenfalls von dem Fahrzeugmotor antreibbare Hilfshydropumpe vorhanden, deren Ausgang einerseits mit der jeweiligen Niederdruckseite des Hydraulikkreises zwischen Hydro-Verstellpumpe und den Hydromotoren verbunden ist und andererseits Druckflüssigkeit für das Umschalten der Freilaufkupplungen liefert. Dieser hydrostatische Zusatzantrieb ist voluminös und schwer und für den Einsatz bei Kraftfahrzeugen, insbesondere Personenkraftwagen, mit denen höhere Fahrgeschwindigkeiten erzielbar sein sollen, wenig geeignet.

Die Erfindung geht von der durch Vergleichsbewertungen gewonnenen Erkenntnis aus, daß der Allradbetrieb gegenüber dem Betrieb bei Antrieb nur einer der Fahrzeugachsen hinsichtlich des Vortriebs bei glatter Fahrbahn (d.h. Haftreibungsbeiwert $\mu < 0{,}3$) vorteilhaft ist. Eine derartige glatte Fahrbahn läßt aus Sicherheitsgründen (Bremsweg) allerdings nur verhältnismäßig geringe Fahrgeschwindigkeiten ($V < 80$ km/h) zu. Bei diesen verhältnismäßig geringen Fahrgeschwindigkeiten weist eine Antriebseinrichtung mit für diesen Einsatzbereich vorgesehenem hydrostatischem Zusatzantrieb einen Nutzwert auf, der dem eines ausschließlich mechanischen Allradantriebs vergleichbar ist. Da bei glatter Fahrbahn, bei welcher der Zusatzantrieb eingesetzt werden soll, nur eine relativ geringe Zugkraft bis in die Nähe der physikalischen Haftgrenze an den Fahrzeugrädern der Zusatzantriebsachse wirksam werden kann, können verhältnismäßig schwache Motoren als Zusatzantriebsmotoren verwendet werden. Beispielsweise bewirkt eine Zugkraft in der Größenordnung von jweils 600 N bis 800 N an den beiden Fahrzeugrädern der Zusatzantriebsachse eines Personenkraftwagens mit einem Gewicht von etwa 1450 kg, der an der Antriebsachse im 1. Gang eine Zugkraft von insgesamt 10700 N entwickeln kann, von der bei glatter Fahrbahn allerdings nur ein geringer Teil wirksam werden kann, eine ganz erhebliche Verbesserung der Traktion.

Der Erfindung liegt in erster Linie die Aufgabe zugrunde, eine Antriebseinrichtung der eingangs genannten Art zu schaffen, die einen verhältnismäßig geringen Aufwand erfordert, wenig Bauraum beansprucht und relativ geringe Massen aufweist, so daß sie insbesondere für Personenkraftwagen od. dgl. geeignet ist, die Fahrzeugräder und sonstige Fahrzeugkomponenten in den für diese Fahrzeugart üblichen Abmessungen aufweisen und für verhältnismäßig hohe maximale Fahrgeschwindigkeitnen ausgelegt sind.

Die Lösung dieser Aufgabe ist in dem kennzeichnenden Teil des Patentanspruchs 1 angegeben. Durch sie wird erreicht, daß der Zusatzantrieb verhältnismäßig leicht sein kann, was sich u.a. günstig auf den Kraftstoffverbrauch des Kraftfahrzeugs auswirkt. Der Kraftstoffverbrauch ist auch deshalb niedrig, weil der Zusatzantrieb häufig, beispielsweise während 95 % der Einsatzzeit des Kraftfahrzeugs, wegen der Anordnung der Schaltkupplung zwischen Hydromotor und Nabe des Fahrzeugrades weitgehend vollständig abgeschaltet ist. Besonders vorteilhaft ist, daß bei abgeschaltetem Zusatzantrieb die Einrichtung druckentlastet ist, was für

2

die Fahrsicherheit günstig ist. Für die erfindungsgemäße Antriebseinrichtung sind verhältnismäßig geringe Änderungen des Kraftfahrzeugs gegenüber einem Kraftfahrzeug mit Antrieb nur einer der Fahrzeugachsen erforderlich, so daß sowohl Fahrzeuge mit Antrieb nur einer der Fahrzeugachsen als auch solche mit Allradantrieb weitgehend gleiche Teile aufweisen können, was für Serienfertigung wahlweise des einen oder anderen Typs günstig ist. Die erfindungsgemäße Antriebseinrichtung ermöglicht, die Antriebskraft an den Fahrzeugrädern mit Zusatzantrieb stufenlos einzustellen und außerdem fein zu dosieren. Der Zusatzantrieb hat nur einen geringen Einfluß auf das Lenkverhalten, weil er bei hohen Fahrgeschwindigkeiten abgeschaltet ist und bei zugeschaltetem Zusatzantrieb bei niedrigen Fahrgeschwindigkeiten nur verhältnismäßig geringe Zugkräfte an den Fahrzeugrädern der Zusatzantriebsachse wirken.

Die Antriebseinrichtung nach der Erfindung ermöglicht darüber hinaus in einfacher Weise den Einsatz einer elektronischen Regelung für den Zusatzantrieb. Mit einer derartigen Regelung kann beispielsweise gewährleistet werden, daß der Zusatzantrieb nur bei verhältnismäßig geringen Fahrgeschwindigkeiten wirksam wird.

Zur Versorgung der Hydromotoren mit Antriebsenergie können zwei Hydropumpen vorgesehen sein, von denen eine als Hilfspumpe ausgebildet sein kann. Diese Anordnung ermöglicht, Versorgungs- und Schaltungsprobleme in einfacher Weise zu lösen.

Die erfindungsgemäße Antriebseinrichtung ist sowohl bei Kraftfahrzeugen mit Handschalt- als auch bei solchen mit Automatikgetriebe einsetzbar. Außerdem ermöglicht sie ohne wesentlichen Mehraufwand in einfacher Weise einen Kriechgang.

Zweckmäßige Ausgestaltungen der Erfindung sind in den Unteransprüchen gekennzeichnet.

In der Zeichnung ist ein Ausführungsbeispiel der Erfindung schematisch dargestellt, und zwar zeigt

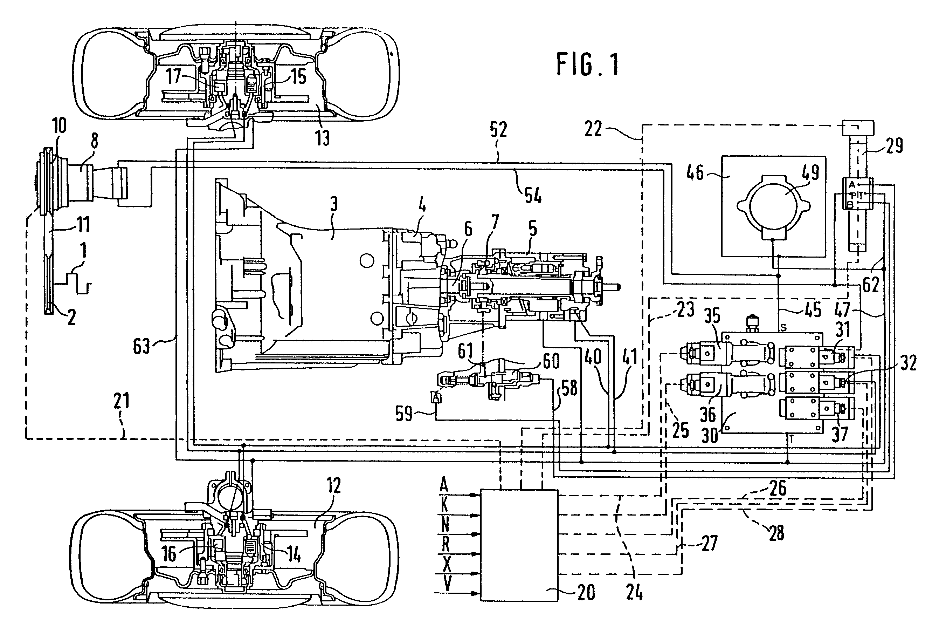

Fig. 1     einen hydrostatischen Zusatzantrieb für die Vorderräder eines Personenkraftwagens mit Standardantrieb, also vorn angeordnetem Fahrzeugmotor und mechanischem Hinterradantrieb,

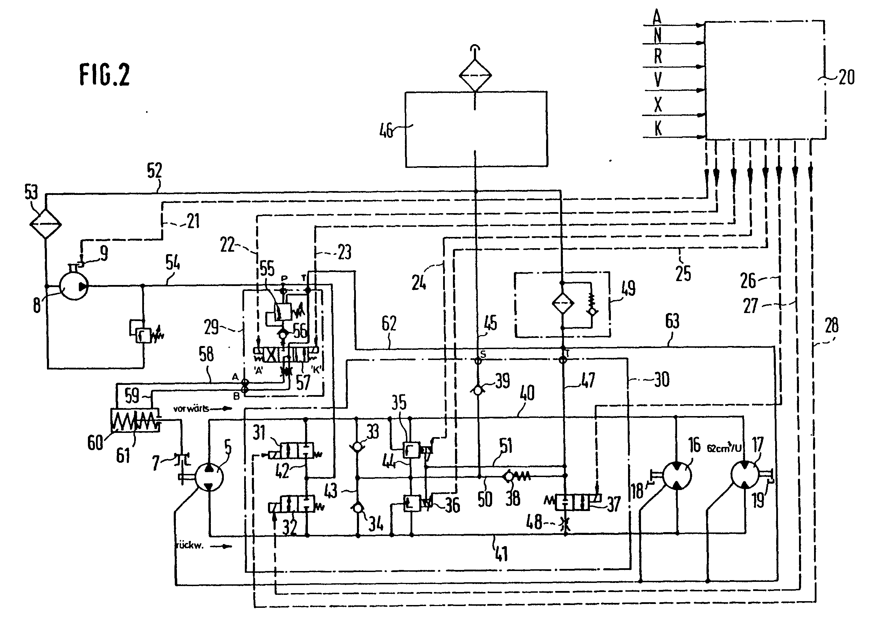

Fig. 2     einen Schaltplan für den hydrostatischen Zusatzantrieb nach Fig. 1,

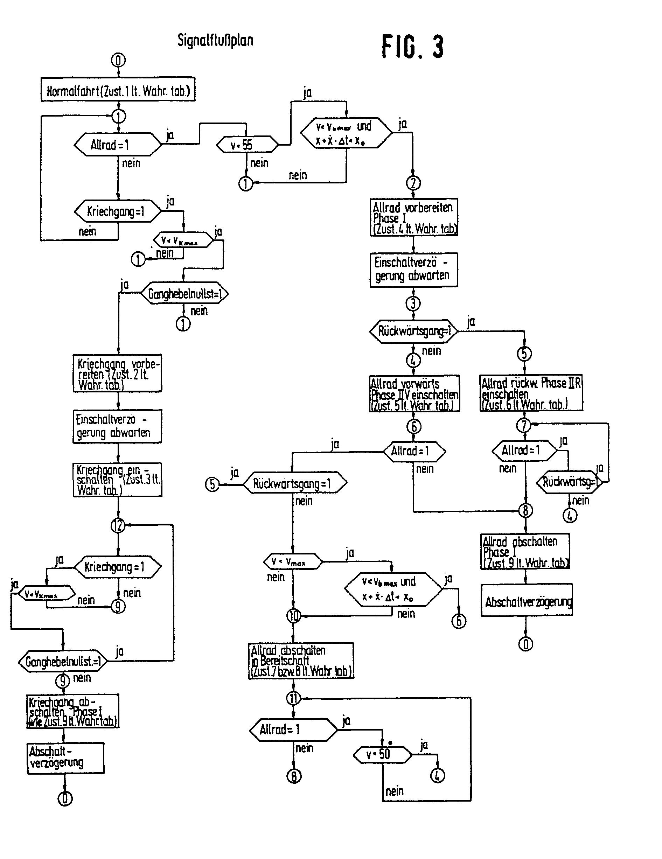

Fig. 3     einen Signalflußplan für den hydrostatischen Zusatzantrieb nach Fig. 1 und

Fig. 4     eine Wahrheitstabelle für den hydrostatischen Zusatzantrieb nach Fig. 1.

Die Kurbelwelle 1 des nicht weiter dargestellten Fahrzeugmotors, der als Brennkraftmaschine ausgebildet ist, trägt an ihrem vorderen Ende eine Keilriemenscheibe 2. Am hinteren Ende des Fahrzeugmotors ist ein Gangwechselgetriebe 3 befestigt. An dessen Getriebedeckel 4 an der Getriebeabtriebsseite ist eine Hydropumpe 5 angeflanscht, durch welche die Getriebeausgangswelle 6 hindurch-geführt ist. Diese ist mit den Fahrzeug-Hinterrädern in nicht dargestellter bekannter Weise mechanisch antriebsverbunden. Zwischen der Getriebeausgangswelle 6 und der Hydropumpe 5 ist eine Schaltkupplung 7 vorgesehen.

Neben der als Hauptpumpe dienenden Hydropumpe 5 ist eine als Schrägachsenkonstantpumpe ausgebildete Hilfshydropumpe 8 vorgesehen, die über eine als Elektromagnetkupplung ausgebildete Schaltkupplung 9, eine Keilriemenscheibe 10 und einen Keilriemen 11 von der Keilriemenscheibe 2 und damit von der Kurbelwelle 1 des Fahrzeugmotors antreibbar ist.

Die beiden lenkbaren Fahrzeug-Vorderräder 12, 13 bergen in ihren Naben 14, 15 jeweils einen auf dem zugeordneten Achsschenkel angeordneten, als Radnabenmotor ausgebildeten Hydromotor 16, 17. Die beiden Hydromotoren 16, 17 sind als Axialkolbenkonstantmotoren ausgebildet und durch Umkehr der Durchflußrichtung reversierbar. Zwischen den Hydromotoren 16, 17 und den Naben 14, 15 ist in diesen jeweils eine Schaltkupplung 18, 19 angeordnet.

Zur Steuerung sind sowohl elektronische als auch Hydraulikelemente vorgesehen.

Ein elektronisches Steuergerät 20 ist an Sensoren angeschlossen, welche dem Steuergerät 20 Eingangssignale liefern. Dabei werden folgende Größen erfaßt:

- Allradtastenstellung A
- Ganghebelneutralstellung N
- Stellung Rückwärtsgang R
- Fahrzeuggeschwindigkeit V
- Stellung Gaspedal X
- Kriechgangtastenstellung K

Zur Weiterleitung der Ausgangssignale des elektronischen Steuergeräts 20 sind an dieses Elektroleitungen 21 - 28 angeschlossen. Die Elektroleitung 21 führt zu der als Elektromagnetkupplung ausgebildeten Schaltkupplung 9, über welche die Hilfshydropumpe 8 antreibbar ist. Die Elektroleitungen 22, 23 führen zu einer Verkettungssäule 29, die Bestandteil der hydraulischen Steuerelemente ist. Die Elektroleitungen 24 - 28 führen zu einem Ventilblock 30, der ebenfalls Teil der hydraulischen Steuerelemente ist.

In dem Ventilblock 30 sind folgende Ventile zusammengefaßt:

-ein als 2/2 Wegeventil ausgebildetes elektrisch betätigbares Fahrtrichtungsventil 31 für Vorwärtsfahrt,

-ein ebenfalls als 2/2 Wegeventil ausgebildetes elektrisch betätigbares Fahrtrichtungsventil 32 für Rückwärtsfahrt,

3

- zwei Nachsaugventile 33, 34,
- zwei elektrisch betätigbare Proportional-Druckbegrenzungs-ventile 35, 36,
- ein Ablaufventil 37, das ebenso wie die beiden Fahrtrichtungsventile 31, 32 als elektrisch betätigbares 2/2 Wege- ventil ausgebildet ist,

- ein Vorspannventil 38,
- ein Zulaufventil 39.

Die Hydropumpe 5 ist durch eine Hydraulikleitung 40 für Vortwärtsfahrt und eine Hydraulikleitung 41 für Rückwärtsfahrt in Parallelschaltungsanordnung mit den beiden Hydromotoren 16, 17 verbunden. In einer ersten Hydraulik-Verbindungsleitung 42, die zwischen der Hydropumpe 5 und den Hydromotoren 16, 17 an die beiden Hydraulikleitungen 40, 41 angeschlossen ist, sind in Reihenschaltung die beiden Fahrtrichtungsventile 31, 32 angeordnet. Parallel zu diesen sind in einer zweiten Hydraulik-Verbindungsleitung 43, die zwischen der ersten Hydraulik-Verbindungsleitung 42 und den beiden Hydromotoren 16, 17 an die Hydraulikleitungen 40, 41 angeschlossen ist, die beiden Nachsaugventile 33, 34 in Serie derart angeordnet, daß sie von dem zwischen ihnen befindlichen Leitungsabschnitt aus in Richtung auf die Hydraulikleitung 40 bzw. Hydraulikleitung 41 zu durchströmbar sind. Parallel zu den beiden Nachsaugventilen 33, 34 sind in einer dritten Hydraulik-Verbindungsleitung 44, die zwischen der zweiten Hydraulik-Verbindungsleitung 43 und den beiden Hydromotoren 16, 17 an die Hydraulikleitungen 40, 41 angeschlossen ist, die beiden Druckbegrenzungsventile 35, 36 in Serie der art angeordnet, daß sie von den Hyraulikleitungen 40 bzw. 41 aus auf den zwischen ihnen befindlichen Leitungsabschnitt zu durch-strömbar sind. Die zweite Hydraulik-Verbindungsleitung 43 ist zwischen den beiden Nachsaugventilen 33, 34 ebenso wie die drit-te Hydraulik-Verbindungsleitung 44 zwischen den beiden Druckbegrenzungsventilen 35, 36 mit einer Zulaufleitung 45 verbunden, die in einen Behälter 46 für Hydraulikflüssigkeit mündet und zwischen dem Behälter 46 und den Stellen, an denen sie mit den Hydraulik-Verbindungsleitungen 43, 44 verbunden ist, das Zulaufventil 39 enthält. Zwischen dem Anschluß der dritten Hyraulik-Verbindungsleitung 44 mit der Hydraulikleitung 41 für Rückwärtsfahrt und den beiden Hydromotoren 16, 17 ist die Hydraulikleitung 41 mit einer Ablaufleitung 47 verbunden, in der das Ablaufventil 37 und eine diesem vorgeschaltete Drosselstelle 48 angeordnet sind. Die Ablaufleitung 47 führt zu dem Behälter 46 und enthält einen diesem vorgeschalteten Rücklauffilter 49. Zwischen dem Zulaufventil 39 und dem Anschluß der Zulaufleitung 45 an die dritte Hydraulik-Verbindungsleitung 44 ist an die Zulaufleitung 45 eine Hydraulikleitung 50 angeschlossen, die das Vorspannventil 38 derart enthält, daß es von der Zulaufleitung 45 aus durchströmbar ist, und zwischen dem Ablaufventil 37 und dem Rücklauffilter 49 mit der Ablaufleitung 47 verbunden ist. Mit dieser sind ferner die beiden Druckbegrenzungsventile 35, 36 verbunden, und zwar durch eine Hydraulikleitung 51, die ebenfalls zwischen dem Ablaufventil 37 und dem Rücklauffilter 49 an die Ablaufleitung 47 angeschlossen ist.

Eine Hilfszulaufleitung 52, in der ein Saugfilter 53 enthalten ist, führt von dem Behälter 46 zu der Hilfshydropumpe 8. An deren Ausgang ist eine Hydraulikleitung 54 angeschlossen, die sowohl zu der Verkettungssäule 29 führt als auch mit der ersten Hydraulik-Verbindungsleitung 42 zwischen den beiden Fahrtrichtungsventilen 31, 32 verbunden ist.

In der Verkettungssäule sind folgende Ventile zusammengefaßt:
- ein Druckreduzierventil 55,
- ein Rückschlagventil 56,
- ein als 4/3 Wegeventil ausgebildetes elektrisch betätigbares Kupplungsventil 57.

An die Hydraulikleitung 54 ist das Druckreduzierventil 55 angeschlossen, dessen Ausgang mit dem Rückschlagventil 56 derart verbunden ist, daß das Rückschlagventil 56 von dem Druckreduzierventil 55 aus durchströmbar ist. Mit dem Ausgang des Rückschlagventils 56 ist der Eingang des Kupplungsventils 57 verbunden. An dieses sind zwei Hydraulikleitungen 58, 59 angeschlossen, die zu einem Schaltzylinder 60 führen, dessen Stellglied 61, das beidseitig beaufschlagbar ist, mit der Schaltkupplung 7 trieblich verbunden ist. Durch eine Rücklaufleitung 62, an die auch das Druckreduzierventil 55 angeschlossen ist, ist das Kupplungsventil 57 mit der Ablaufleitung 47 zwischen dem Ablaufventil 37 und dem Rücklauffilter 49 verbunden. Eine Leckageleitung 63 verbindet sowohl die Hydropumpe 5 als auch die beiden Hydromotoren 16, 17 mit der Ablaufleitung 47 zwischen dem Ablaufventil 37 und dem Rücklauffilter 49.

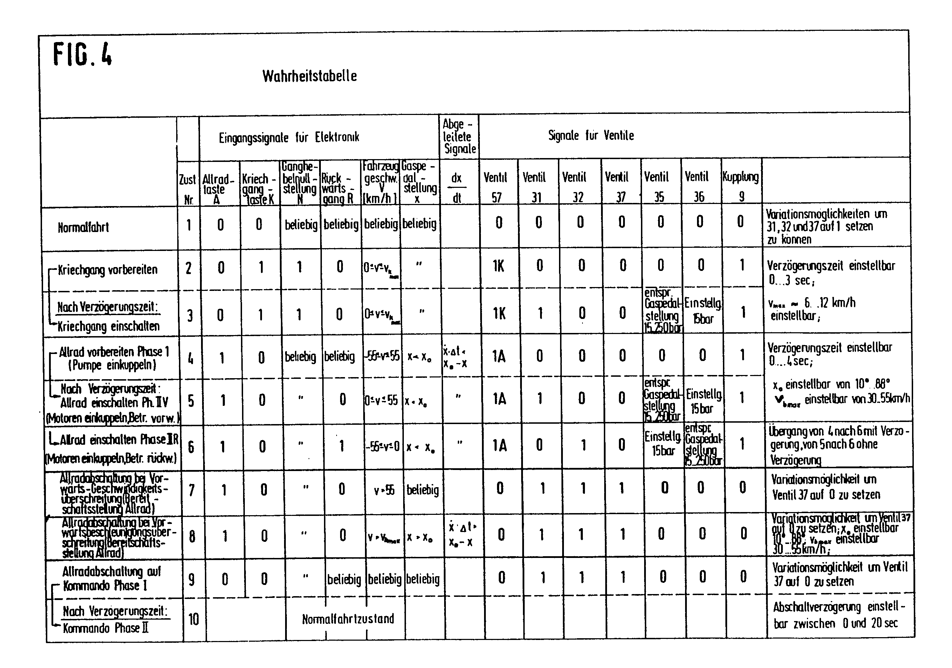

Bei Normalfahrt, bei der die Fahrzeug-Hinterräder in bekannter Weise von dem laufenden Fahrzeugmotor aus mechanisch angetrieben werden ein Antrieb der Fahrzeug-Vorderräder aber nicht erfolgt, befinden sich das elektronische Steuergerät 20 in Ruhestellung, die ansteuerbaren Ventile 31, 32, 35, 36, 37 und 57 in Nullstellung und die Kupplungen 7, 9, 18 und 19 in ausgekuppeltem Zustand (Zustand Nr. 1 nach Fig. 4), und zwar sowohl bei Vorwärts- als auch bei Rückwärtsfahrt.

Zur Aktivierung des Zusatzantriebs können dem elektronischen Steuergerät 20 zwei unterschiedliche Eingangssignale zugeleitet werden. Das erste dieser beiden Eingangssignale wird durch Betätigen einer Allradtaste, das zweite dieser beiden Eingangssignale wird durch Betätigen einer Kriechgangtaste ausgelöst. Der Schaltzustand der beiden Tasten kann am Armaturenbrett durch Kontrollleuchten angezeigt werden.

Nach Auslösen des Eingangssignals für Allradbetrieb durch Verlagerung der Allradtaste aus der

4

Ruhestellung in die Betriebsstellung (Allrad-Kontrolleuchte eingeschaltet) prüft das elektronische Steuergerät 20, ob die momentane Fahrgeschwindigkeit V unter einem Grenzwert $V_{Amax}$ liegt, oberhalb dessen der Zusatzantrieb ausgeschlossen ist und der beispielsweise 60 km/h betragen kann und bei dem Ausführungsbeispiel 55 km/h beträgt. Dieser Fahrgeschwindigkeit entspricht bei einem Raddurchmesser von etwa 0,6 m eine Rad- und damit Hydromotorendrehzahl von etwa 500 min$^{-1}$. Übersteigt die momentane Fahrgeschwindigkeit V den Grenzwert $V_{Amax}$, wird der Zusatzantrieb nicht aktiviert, die Prüfung durch das elektronische Steuergerät 20 aber ständig wiederholt. Liegt die momentane Fahrgeschwindigkeit V unterhalb des Grenzwertes $V_{Amax}$ prüft das elektronische Steuergerät 20, ob die momentane Fahrgeschwindigkeit V unterhalb eines Grenzwertes $V_{bmax}$ für die Fahrgeschwindigkeit bei starker Fahrzeugbeschleunigung liegt und ob die Gaspedalauslenkung unterhalb einstellbaren Grenzwertes $x_o$ liegt. Der weitere Grenzwert $V_{bmax}$ wird von dem Steuergerät 20 abhängig von der momentanen Beschleunigung (z. B. b > $3^m/s^2$) zweckmäßigerweise zwischen 30 km/h und 55 km/h eingestellt. Der Grenzwert $x_o$ ist vorzugsweise zwischen 10° und 88° Gaspedalschwenkwinkel einstellbar. Ist das Ergebnis dieser Prüfung negativ, wird der Zusatzantrieb nicht zugeschaltet, das elektronische Steuergerät 20 setzt aber die Prüfungen laufend fort. Ist das Prüfungsergebnis positiv, wird über die Elektroleitung 21 die Schaltkupplung 9 in den gekuppelten Zustand gesteuert und das Kupplungsventil 57 derart eingestellt (Stellung A), daß die Hydraulikleitung 54 mit der Hydraulikleitung 59 verbunden ist (Zustand Nr 4 nach Fig. 4). Durch diese Steuerung wird der Allradbetrieb vorbereitet. Die von dem Fahrzeugmotor über die Schaltkupplung 9 angetriebene Hilfshydropumpe 8 beaufschlagt dabei über die Hydraulikleitungen 54, 59 das Stellglied 61 des Schaltzylinders 60 derart, daß die Schaltkupplung 7 die Hydropumpe 5 mit der Getriebeausgangswelle 6 verbindet. Gleichzeitig wird in der ersten Hydraulik-Verbindungsleitung 42 zwischen den beiden Fahrtrichtungsventilen 31, 32 Druck aufgebaut.

Die Hydropumpe 5 beaufschlagt je nach Fahrtrichtung entweder über die Hydraulikleitung 40 für Vorwärtsfahrt oder über die Hydraulikleitung 41 für Rückwärtsfahrt die beiden Hydromotoren 16, 17, die aus dem Stillstand, in dem sie sich bei Normalfahrtzustand befinden, lastlos bis zu der Drehzahl der beiden Fahrzeug-Vorderräder 12, 13 hoch laufen können. Die Hydraulikleitungen 40, 41 bilden dabei gemeinsam mit der Hydropumpe 5 und den beiden Hydromotoren 16, 17 einen geschlossenen Hydraulikkreis. Die Hydropumpe 5 und die beiden Hydromotoren 16, 17 sind derart ausgelegt, daß die Liefermenge der Hydropumpe 5, deren Drehzahl den Drehzahlen der beiden Fahrzeug-Vorderräder 12, 13 bei schlupflosem Betrieb zumindest etwa proportional ist, nur geringfügig größer als das gemeinsame Schluckvolumen der beiden Hydromotoren 16, 17 ist. Beispielsweise kann das Schluckvolumen eines Hydromotors 16, 17 62 cm$^3$/U betragen. Bei einem Hinterachs-Obersetzungsverhältnis $i_{HA}$ = 3,25 ergibt sich damit bei einer Überschußmenge von etwa 15 % eine Liefermenge der Hydropumpe 5 von etwa 44 cm$^3$/U. Die von der Hydropumpe 5 benötigte Hydraulikflüssigkeit fließt dem geschlossenen Hyraulikkreis über die Zulaufleitung 45 und die zweite Hydraulik-Verbindungsleitung 43, welche die beiden Nachsaugventile 33, 34 enthält, zu.

Nach dem Hochlaufen der beiden Hydromotoren 16, 17 baut sich bei einem den Drehbewegungen der beiden Hydromotoren 16, 17 entgegenstehenden Widerstand auf der Hochdruckseite des geschlossenen Hydraulikkreises ein Druck auf, dessen Höhe von der Einstellung der Druckbegrenzungsventile 35, 36 bestimmt wird. Die Einstellung der Druckbegrenzungsventile 35, 36 ist in Abhängigkeit von der Gaspedalstellung zwischen einem unteren und einem oberen Grenzwert stufenlos veränderbar. Bei entlastetem und damit in Ruhestellung befindlichem Gaspedal sprechen die Druckbegrenzungsventile 35, 36 an, sobald der untere Grenzwert, der bei dem Ausführungsbeispiel 15 bar beträgt, erreicht ist (Betriebs-Grundstellung) Dieser Druck reicht aus, um die durch die Hydraulikflüssigkeit betätigbaren Schaltkupplungen 18, 19 der Hydromotoren 16, 17 in den gekuppelten Zustand zu schalten, so daß der Kraftfluß zwischen der Hydropumpe 5 und den Fahrzeugvorderrädern 12, 13 hergestellt ist. Bei Verlagerung des Gaspedals aus der Ruhestellung heraus steigt der Ansprechdruck der Druckbegrenzungsventile 35, 36 entsprechend an, und zwar bei ausreichender Verlagerung des Gaspedals bis zu dem oberen Grenzwert, der bei dem Ausführungsbeispiel 250 bar beträgt. Mit diesem Druck kann ein Motordrehmoment von etwa 235 Nm und dementsprechend bei einem Raddurchmesser von etwa 0,6 m eine am Radumfang wirkende Zugkraft von etwa 780 N erreicht werden.

Nach Ablauf einer Verzögerungszeit, die mit der Vorbereitung des Allradbetriebs (Zustand Nr 4 nach Fig. 4) beginnt und einstellbar ist und zwar vorteilhaft auf einen Wert bis zu etwa 4 Sekunden, vorzugsweise 1 bis 3 Sekunden, während welcher die Hydromotoren 16, 17 hoch laufen können, prüft das elektronische Steuergerät 20, ob ein Vorwärtsgang oder der Rückwärtsgang eingelegt ist und schaltet je nach dem Ergebnis dieser Prüfung entweder über das Fahrtrichtungsventil 31 für Vorwärtsfahrt oder über das Fahrtrichtungsventil 32 für Rückwärtsfahrt den Hydraulikflüssigkeitsstrom der Hilfshydropumpe 8 der jeweiligen Hochdruckseite des geschlossenen Hydraulikkreises zu. Dadurch werden die Hydromotoren 16, 17 zusätzlich beaufschlagt. Außerdem dient die von der Hilfshydropumpe 8 in den Hydraulikkreis gelieferte Hydraulikflüssigkeit dem Ausgleichen der Leckölmenge und ferner dem Bereitstellen einer zusätzlichen Überschußmenge für Kurvenfahrt. Die Hilfshydropumpe 8 ist derart ausgelegt, daß sie den gleichen Maximaldruck wie die Hydropumpe 5 liefern kann, bei dem Ausführungsbeispiel also 250 bar. Die Liefermenge der Hilfshydropumpe 8 kann etwa 5 cm$^3$/U betragen. Die Drehzahl der Hilfshydropumpe 8 ist derjenigen der Hydropumpe 5 im Verhältnis des jeweils eingelegten Vorwärts- oder Rückwärtsgangs proportional und wird daher in der Regel höher als die Drehzahl der Hydropumpe 5 sein.

Ist ein Vorwärtsgang eingelegt, ergibt sich, daß nach Ablauf der Verzögerungszeit der Allradantrieb vorwärts eingeschaltet ist (Zustand Nr. 5 nach Fig. 4). Dabei ist das Fahrtrichtungsventil 31 für Vorwärtsfahrt in die Betriebsstellung gesteuert. Das Fahrtrichtungsventil 32 für Rückwärtsfahrt befindet sich in Ruhestellung.

Während dieses Betriebszustands prüft das elektronische Steuergerät 20 laufend, ob die Allradtaste sich weiterhin in der Betriebsstellung befindet und demgemäß Allradbetrieb gewünscht ist. Bei positivem Prüfungsergebnis wird weiter laufend geprüft, ob weiterhin ein Vorwärts- oder der Rückwärtsgang eingelegt ist. Ist weiterhin ein Vorwärtsgang eingelegt, wird weiterhin laufend geprüft, ob die momentane Fahrgeschwindigkeit V unterhalb des Grenzwertes $V_{Amax}$ liegt, oberhalb dessen der Zusatzantrieb ausgeschlossen ist, und bei positivem Ergebnis dieser Prüfung ferner, ob die momentane Fahrgeschwindigkeit V unterhalb des weiteren Grenzwertes $V_{bmax}$ für die Fahrgeschwindigkeit bei starker Fahrzeugbeschleunigung liegt und ob die Gaspedalauslenkung unterhalb des einstellbaren Grenzwertes $x_0$ liegt. Ergibt die Prüfung, daß die Grenzwerte nicht überschritten sind, wird der Allradbetrieb fortgesetzt. Ergibt die Prüfung jedoch, daß die Grenzwerte überschritten sind, wird der Zusatzantrieb abgeschaltet, bleibt aber in Bereitschaft (Zustand Nr. 7 bzw. Nr. 8 nach Fig. 4). Das Abschalten des Zusatzantriebs wird dadurch erreicht, daß neben dem Fahrtrichtungsventil 31 für Vorwärtsfahrt auch das Fahrtrichtungsventil 32 für Rückwärtsfahrt und außerdem das Ablaufventil 37 in die Betriebsstellung gesteuert werden. Dadurch wird ein Kurzschluß in dem geschlossenen Hydraulikkreis und eine Entlastung zu dem Behälter 46 für die Hydraulikflüssigkeit hin erreicht. Gleichzeitig wird die Schaltkupplung 9 der Hilfshydropumpe 8 geöffnet, so daß die Hilfshydropumpe 8 abgeschaltet und damit die Beaufschlagung des Stellglieds 61 in dem Schaltzylinder 60 beendet wird. Außerdem werden das Kupplungsventil 57 und die beiden Druckbegrenzungsventile 35, 36 in die Ruhestellung gesteuert. Sobald der Hydraulikkreis drucklos ist, werden die Schaltkupplung 7 der Hydropumpe 5 und die Schaltkupplungen 18, 19 der Hydromotoren 16, 17 durch Federkraft ausgerückt.

Bei Erreichen der Abschaltgrenze kann der Fahrer z. B. akustisch gewarnt werden. Bei abgeschaltetem, aber in Bereitschaft befindlichem Zusatzantrieb kann dieser Betriebszustand dem Fahrer angezeigt werden, beispielsweise dadurch, daß die Allrad-Kontrolleuchte blinkt.

Während der Bereitschaftsstellung prüft das elektronische Steuergerät laufend, ob weiterhin die Allradtaste in die Betriebsstellung geschaltet ist. Bei positivem Ergebnis dieser Prüfung wird ferner geprüft, ob die momentane Fahrgeschwindigkeit V unter einen Grenzwert gesunken ist, der wegen der Einschalthysterese etwa 10 % unter dem Grenzwert $V_{Amax}$ liegt, oberhalb dessen der Zusatzantrieb ausgeschlossen ist, und bei dem Ausführungsbeispiel 50 km/h beträgt. Sobald dieser Grenzwert unterschritten wird, wird der Zusatzantrieb selbsttätig wieder zugeschaltet.

Ergibt nach dem Vorbereiten des Allradbetriebs (Zustand Nr. 4 nach Fig. 4) die Prüfung, daß der Rückwärtsgang eingelegt ist, wird der Allradbetrieb rückwärts in einer dem Allradbetrieb vorwärts entsprechenden Weise herbeigeführt (Zustand Nr. 6 nach Fig. 4). Bei dem Allradbetrieb rückwärts ist jedoch die Hilfshydropumpe 8 über das Fahrtrichtungsventil 32 für Rückwärtsfahrt der Hochdruckseite des geschlossenen Hydraulikkreises zugeschaltet, während das Fahrtrichtungsventil 31 für Vorwärtsfahrt sich in Ruhestellung befindet.

Aus der Betriebsphase, in welcher der Allradbetrieb vorbereitet ist (Zustand Nr. 4 nach Fig. 4), erfolgt die Zuschaltung des Zusatzantriebs bei Rückwärtsfahrt (Zustand Nr. 6 nach Fig. 4) ebenso wie bei Vorwärtsfahrt (Zustand Nr. 5 nach Fig. 4) erst nach Ablauf einer Verzögerungszeit, in welcher die Hydromotoren 16, 17 lastlos hochlaufen können. Wird jedoch während des Allradbetriebs vorwärts der Rückwärtsgang eingelegt, wird ohne Verzögerung umgesteuert.

Während des Allradbetriebs rückwärts prüft das elektronische Steuergerät 20 laufend, ob sich die Allradtaste weiterhin in Betriebsstellung befindet. Ist das Ergebnis dieser Prüfung positiv, wird ferner geprüft, ob der Rückwärtsgang weiterhin eingelegt ist. Ist das der Fall, bleibt der Allradbetrieb rückwärts erhalten. Sobald jedoch der Rückwärtsgang nicht mehr eingelegt ist, werden die Fahrtrichtungsventile 31, 32, die Druckbegrenzungsventile 35, 36 und das Ablaufventil 37 in die Ruhestellung gesteuert, so daß der Allradbetrieb vorbereitet ist (Zustand Nr. 4 nach Fig. 4).

Ergibt sowohl bei Vorwärts- als auch bei Rückwärtsfahrt die laufende Prüfung, daß die Allradtaste aus der Betriebsstellung in die Ruhestellung zurückgestellt worden ist, was das Erlöschen der Allrad-Kontrolleuchte zur Folge hat, erhalten zunächst die Fahrtrichtungsventile 31, 32 und das Ablaufventil 37 die Betriebsstellung, die Druckbegrenzungsventile 35, 36 und das Kupplungsventil 57 hingegen die Ruhestellung. Ferner wird die Schaltkupplung 9 der Hilfshydropumpe 8 ausgerückt. Dies bewirkt eine Abschaltung des Zusatzantriebs (Zustand Nr. 9 nach Fig. 4). Danach wird nach Ablauf einer Abschaltverzögerungszeit, die bis zu etwa 20 Sekunden betragen kann und einstellbar ist, auch bei den Fahrtrichtungsventilen 31, 32 und dem Ablaufventil 37 die Ruhestellung herbeigeführt. Damit ist der Normalfahrtzustand wieder hergestellt (Zustand Nr. 10 nach Fig. 4).

Bei dem Kriechgang ist kein Allradbetrieb, sondern nur ein Antrieb der Fahrzeug-Vorderräder 12, 13 vorgesehen. Der Kriechgangbetrieb soll nur bei geringen Fahrgeschwindigkeiten bis zu einem Grenzwert $V_{Kmax}$ durchgeführt werden, der einstellbar ist und etwa zwischen 6 km/h und 12 km/h betragen kann. Er dient im wesentlichen dem Anfahren.

Nach Auslösen des Eingangssignals für Kriechgangbetrieb durch Verlagerung der Kriechgangtaste aus der Ruhestellung in die Betriebsstellung (Kriechgang-Kontrolleuchte eingeschaltet) prüft das elektronische Steuergerät 20, ob die momentane Fahrgeschwindigkeit V unterhalb des Grenzwertes $V_{Kmax}$ für den Kriechgangbetrieb (Kriechgang-Höchstgeschwindigkeit) liegt und ob sich der Ganghebel in Nullstellung befindet. Bei positivem Ergebnis dieser Prüfung wird die Schaltkupplung 9 der Hilfshydropumpe 8 in den gekuppelten Zustand gesteuert und das Kupplungsventil 57 derart eingestellt (Stellung K), daß die Hydraulikleitung 54 mit der Hydraulikleitung 58 verbunden ist (Zustand Nr. 2 nach Fig. 4). Durch diese Steuerung wird der Kriechgangbetrieb vorbereitet. Die von dem Fahrzeugmotor über die Schaltkupplung 9 angetriebene Hilfshydropumpe 8 beaufschlagt dabei über die Hydraulikleitungen 54, 58 das Stellglied 61 des Schaltzylinders 60 derart, daß die Schaltkupplung 7 die Eingangswelle der Hydropumpe 5 mit dem Pumpengehäuse verbindet, so daß die Hydropumpe 5 blockiert ist und damit als Sperrventil für den geschlossenen Hydraulikkreis wirkt. Gleichzeitig wird in der ersten Hydraulik-Verbindungsleitung 42 zwischen den beiden Fahrtrichtungsventilen 31, 32 Druck aufgebaut.

Nach einer kurzen Verzögerungszeit, die einstellbar ist und vorteilhaft höchstens 3 Sekunden beträgt, während welcher sich der Vorbereitungs-Betriebszustand für den Kriechgangbetrieb einstellen kann, wird für den nur für Vorwärtsfahrt vorgesehenen Kriechgangbetrieb das Fahrtrichtungsventil 31 für Vorwärtsfahrt in die Betriebsstellung gesteuert, also geöffnet. Damit werden die beiden Hydromotoren 16, 17 über die Hydraulikleitung 40 für Vorwärtsfahrt beaufschlagt. Der Druck auf der Hochdruckseite der beiden Hydromotoren 16, 17 wird von dem Druckbegrenzungsventil 35 wiederum in Abhängigkeit von der Gaspedalstellung zwischen dem der Betriebs-Grundstellung entsprechenden unteren Grenzwert von 15 bar und dem oberen Grenzwert von 250 bar variiert. Das Druckbegrenzungsventil 36 auf der Niederdruckseite befindet sich dabei in der Betriebs-Grundstellung, in welcher es auf einen Wert von 15 bar eingestellt ist (Zustand Nr. 3 nach Fig. 4).

Während des Kriechgangbetriebs prüft das elektronische Steuergerät 20 laufend, ob die Kriechgangtaste sich weiterhin in der Betriebsstellung befindet, die Fahrgeschwindigkeit V den vorgegebenen Grenzwert $V_{Kmax}$ nicht übersteigt und der Ganghebel sich weiterhin in Neutralstellung befindet. Ist eines dieser drei Kriterien nicht mehr gegeben, werden sowohl das Fahrtrichtungsventil 32 für Rückwärtsfahrt als auch das Ablaufventil 37 in die Betriebsstellung gesteuert, so daß die beiden Hydromotoren 16, 17 nicht weiter beaufschlagt werden. Gleichzeitig wird die Schaltkupplung 9 in den entkuppelten Zustand geschaltet und damit die Hilfshydropumpe 8 stillgesetzt. Außerdem werden das Kupplungsventil 57 und die beiden Druckbegrenzungsventile 35, 36 in die Ruhestellung gesteuert (Zustand Nr. 9 nach Fig. 4). Nach Ablauf der Abschaltverzögerungszeit werden die Fahrtrichtungsventile 31, 32 und das Ablaufventil 37 wieder in die Ruhestellung zurückgeschaltet. Damit ist der Normalfahrtzustand wieder eingestellt (Zustand Nr. 10 nach Fig. 4). Sobald die Kriechgangtaste aus der Betriebsstellung in die Ruhestellung zurückgestellt wird, erlischt die Kriechgang-Kontrolleuchte.

Für den Kriechgangbetrieb ist nur ein geringer Mehraufwand gegenüber dem für den Allradbetrieb benötigten Aufwand erforderlich. Neben dem Zusatzaufwand für die Steuerung besteht der bauliche Mehraufwand im wesentlichen aus der Ausgestaltung der Schaltkupplung 7 als Blockierkupplung, welche die Antriebswelle der Hydropumpe 5 mit dem Gehäuse der Hydropumpe 5 verblocken kann, der Ausbildung des Schaltzylinders 60 für eine doppelseitige statt einer einseitigen Beaufschlagung des Stellglieds 61 und einer Ausgestaltung des Kupplungsventils 57 zur Steuerung der wechselweisen Beaufschlagung des Stellglieds 61.

In Abweichung von dem Ausführungsbeispiel kann unter Verzicht auf den Kriechgangbetrieb von dem für diesen erforderlichen Mehraufwand abgesehen werden, ohne daß der erfindungsgemäße Allradantrieb beeinträchtigt wird. Es ist aber auch möglich, den Kriechgang nicht nur für Vorwärtsfahrt, sondern auch für Rückwärtsfahrt vorzusehen. Statt gesonderter Kontrolleuchten für den Allradbetrieb und den Kriechgangbetrieb kann eine gemeinsame Kontrolleuchte vorgesehen werden.

Statt bei einem Fahrzeug mit Hinterachsantrieb, wie es bei dem Ausführungsbeispiel vorgesehen ist, kann die erfindungsgemäße Antriebseinrichtung auch bei einem Fahrzeug mit mechanischem Vorderachsantrieb eingesetzt werden, bei dem der Zusatzantrieb auf die sonst antriebslosen Hinterräder wirken kann.

Ferner kann in Abweichung von dem Ausführungsbeispiel vorgesehen sein, daß der Zusatzantrieb sowohl bei Allradbetrieb als auch bei Kriechgangbetrieb ohne Verzögerungszeit eingeschaltet wird. Hierbei wird der geschlossene Hydraulikkreis der die Hydropumpe und die beiden Hydromotoren enthält, bei entsprechender Schaltung der beiden Fahrtrichtungsventile durch die von der Hilfshydropumpe gelieferte Hydraulikflüssigkeit vorgespannt.

EP 0 230 022 B1

**Bezugszeichenliste**

| | |
|---|---|
| 1 | Kurbelwelle |
| 2 | Keilriemenscheibe |
| 3 | Gangwechselgetriebe |
| 4 | Getriebedeckel |
| 5 | Hydropumpe |
| 6 | Getriebeausgangswelle |
| 7 | Schaltkupplung |
| 8 | Hilfshydropumpe |
| 9 | Schaltkupplung |
| 10 | Keilriemenscheibe |
| 11 | Keilriemen |
| 12 | Fahrzeug-Vorderrad |
| 13 | Fahrzeug-Vorderrad |
| 14 | Nabe |
| 15 | Nabe |
| 16 | Hydromotor |
| 17 | Hydromotor |
| 18 | Schaltkupplung |
| 19 | Schaltkupplung |
| 20 | elektronisches Steuergerät |
| 21 | Elektroleitung |
| 22 | Elektroleitung |
| 23 | Elektroleitung |
| 24 | Elektroleitung |
| 25 | Elektroleitung |
| 26 | Elektroleitung |
| 27 | Elektroleitung |
| 28 | Elektroleitung |
| 29 | Verkettungssäule |
| 30 | Ventilblock |
| 31 | Fahrtrichtungsventil (vorwärts) |
| 32 | Fahrtrichtungsventil (rückwärts) |
| 33 | Nachsaugventil |
| 34 | Nachsaugventil |
| 35 | Druckbegrenzungsventil |
| 36 | Druckbegrenzungsventil |
| 37 | Ablaufventil |
| 38 | Vorspannventil |
| 39 | Zulaufventil |
| 40 | Hydraulikleitung (vorwärts) |
| 41 | Hydraulikleitung (rückwärts) |
| 42 | erste Hydraulik-Verbindungsleitung |
| 43 | zweite Hydraulik-Verbindungsleitung |
| 44 | dritte Hydraulik-Verbindungsleitung |
| 45 | Zulaufleitung |
| 46 | Behälter für Hydraulikflüssigkeit |
| 47 | Ablaufleitung |
| 48 | Drosselstelle |
| 49 | Rücklauffilter |
| 50 | Hydraulikleitung |
| 51 | Hydraulikleitung |
| 52 | Hilfzulaufleitung |
| 53 | Saugfilter |
| 54 | Hydraulikleitung |
| 55 | Druckreduzierventil |
| 56 | Rückschlagventil |
| 57 | Kupplungsventil |
| 58 | Hydraulikleitung |
| 59 | Hydraulikleitung |
| 60 | Schaltzylinder |
| 61 | Stellglied |
| 62 | Rückaufleitung |
| 63 | Leckageleitung |

8

## EP 0 230 022 B1

**Patentansprüche**

1. Antriebseinrichtung für Kraftfahrzeuge, insbesondere Personenkraftwagen, mit mechanischer Antriebsverbindung zwischen dem Fahrzeugmotor und den Fahrzeugrädern einer der Fahrzeugachsen (Antriebsachse) sowie mit zu- und abschaltbarem Zusatzantrieb für die Fahrzeugräder der anderen Fahrzeugachse (Zusatzantriebsachse), bei welcher der Zusatzantrieb als hydrostatischer Einzelradantrieb ausgebildet ist, bei dem den Fahrzeugrädern der Zusatzantriebsachse jeweils als Zusatzantriebsmotor ein Hydromotor zugeordnet ist und die Hydromotoren mit wenigstens einer von dem Fahrzeugmotor antreibbaren gemeinsamen Hydropumpe verbunden sind, die der Versorgung der Hydromotoren mit Antriebsenergie dient, dadurch gekennzeichnet, daß die Hydromotoren (16, 17) als Axialkolbenkonstantmotoren in Schrägscheiben-Bauart und als Radnabenmotoren ausgebildet und jeweils in der Nabe (14, 15) der Fahrzeugräder (12, 13) angeordnet sind und jeweils unmittelbar zwischen Hydromotor (16, 17) und Nabe (14, 15) des Fahrzeugrades (12, 13) eine Schaltkupplung vorgesehen ist.

2. Antriebseinrichtung nach Anspruch 1, dadurch gekennzeichnet, daß die zwischen Hydromotor (16, 17) und Nabe (14, 15) des Fahrzeugrades (12, 13) vorgesehene Schaltkupplung als druckmittelbetätigte Schaltkupplung (18, 19) ausgebildet ist.

3. Antriebseinrichtung nach Anspruch 2, dadurch gekennzeichnet, daß die Schaltkupplung (18, 19) durch die die Hydromotoren (16, 17) beaufschlagende Hydraulikflüssigkeit betätigbar ist.

4. Antriebseinrichtung nach Anspruch 1, 2 oder 3, dadurch gekennzeichnet, daß eine Hilfshydropumpe (8) vorgesehen ist, die unabhängig von der Hydropumpe (5) von dem Fahrzeugmotor antreibbar und deren Ausgang mit der jeweiligen Hochdruckseite des Hydraulikkreises zwischen Hydropumpe (5) und den Hydromotoren (16, 17) verbindbar ist.

5. Antriebseinrichtung nach Anspruch 4, dadurch gekennzeichnet, daß das gemeinsame Schluckvolumen der Hydromotoren (16, 17) zumindest annähernd dem Liefervolumen der Hydropumpe (5) gleich ist und eine Überschußmenge für den Antrieb der Hydromotoren (16, 17) durch Zuschalten der Hilfshydropumpe (8) erreichbar ist.

6. Antriebseinrichtung nach Anspruch 4 oder 5, dadurch gekennzeichnet, daß die Hydropumpe (5) mit der Ausgangswelle (6) des Gangwechselgetriebes (3) kuppelbar, die Hydropumpen-Kupplung (7) hydraulisch betätigbar und für die Druckbeaufschlagung der Hydropumpen-Kupplung (7) die Hilfshydropumpe (8) vorgesehen ist.

7. Antriebseinrichtung nach einem der Ansprüche 1 bis 6, gekennzeichnet durch eine elektronische Steuereinrichtung, die ein Zuschalten des Zusatzantriebs oberhalb einer Grenzfahrgeschwindigkeit (Grenzwert $V_{Amax}$) ausschließt.

8. Antriebseinrichtung nach Anspruch 7, dadurch gekennzeichnet, daß die Grenzfahrgeschwindigkeit weniger als 80 km/h, vorzugsweise weniger als 60 km/h, besonders bevorzugt 55 km/h beträgt.

9. Antriebseinrichtung nach Anspruch 7 oder 8, gekennzeichnet durch eine Steuereinrichtung, die ein Zuschalten des Zusatzantriebs oberhalb einer von der Fahrzeugbeschleunigung abhängigen Grenzfahrgeschwindigkeit (Grenzwert $V_{bmax}$) und oberhalb einer Grenzgaspedalauslenkung ($x_0$) ausschließt.

10. Antriebseinrichtung nach Anspruch 9, dadurch gekennzeichnet, daß die Grenzfahrgeschwindigkeit zwischen 30 km/h und 55 km/h beträgt.

11. Antriebseinrichtung nach einem der Ansprüche 7 bis 10, dadurch gekennzeichnet, daß ein Kriechgang mit Hilfe des Zusatzantriebs bei Ganghebelnullstellung des Gangwechselgetriebes (3) vorgesehen ist.

12. Antriebseinrichtung nach Anspruch 11, gekennzeichnet durch eine Steuereinrichtung, die ein Einschalten des Zusatzantriebs oberhalb einer Grenzfahrgeschwindigkeit (Grenzwert $V_{Kmax}$) ausschließt.

13. Antriebseinrichtung nach Anspruch 12, dadurch gekennzeichnet, daß die Grenzfahrgeschwindigkeit zwischen 6 km/h und 12 km/h beträgt.

14. Antriebseinrichtung nach einem der Ansprüche 11 bis 13, dadurch gekennzeichnet, daß die Hydropumpe (5) blockierbar ausgebildet ist.

**Claims**

1. Drive means for motor vehicles, especially passenger cars, comprising a mechanical drive connection between the vehicle engine and the vehicle wheels of one of the vehicle axles (the driving axle) and an on/off switchable additional drive for the vehicle wheels of the other vehicle axle (the additional driving axle), the additional drive being a hydrostatic single-wheel drive, in which the vehicle wheels of the additional driving axle are each associated with an additional drive motor in the form of a fluid power motor aid the fluid power motors are connected to at least one common fluid power pump drivable by the vehicle engine and supplying the fluid power motors with driving energy, characterised in that the fluid power motors (16, 17) are wheel hub motors and axial-piston fixed-displacement motors with an inclined plate and are each disposed in the hub (14, 15) of the respective vehicle wheels (12, 13) and a clutch is provided directly between each fluid power motor (16, 17) and the hub (14, 15) of the vehicle wheel (12, 13).

9

2. Drive means according to claim 1, caracterised in that the clutch provided between the fluid power motor (16, 17) and the hub (14, 15) of the vehicle wheel (12, 13) is a pressure-medium actuated clutch (18, 19).

3. Drive means according to claim 2, characterised in that the clutch (18, 19) is adapted to be actuated by the hydraulic fluid supplying the fluid power motors (16, 17).

4. Drive means according to claim 1, 2 or 3, characterised in that an auxiliary fluid power pump (8) is provided which is driveable by the vehicle engine independently of the fluid power pump (5) and its output is connectable to the respective high-pressure side of the hydraulic circuit between the fluid power pump (5) and the fluid power motors (16, 17).

5. Drive means according to claim 4, characterised in that the combined absorption volume of the fluid power motors (16, 17) is at least approximately equal to the delivery volume of the fluid power pump (5) and an excess quantity for driving the fluid power motors (16, 17) is obtainable by connecting the auxiliary fluid power pump (8).

6. Drive means according to claim 4 or 5, characterised in that the fluid power pump (5) is adapted to be coupled to the output shaft (6) of the speed-change gear (3), the fluid power pump coupling (7) is hydraulically actuated and the auxiliary fluid power pump (5) is provided for pressurising the fluid power coupling (7).

7. Drive means according to any of claims 1 to 6, characterised by an electronic control device which prevents the additional drive being switched on above a limiting travel speed (limiting value $V_{Amax}$).

8. Drive means according to claim 7, characterised in that the limiting travel speed is less than 80 km/h, preferably less than 60 km/h and particularly preferably 55 km/h.

9. Drive means according to claim 7 or 8, characterised by a control device which prevents the additional drive being switched on above a limiting travel speed (limiting value $V_{bmax}$) depending on the vehicle acceleration and above a limiting accelerator-pedal deflection ($x_0$).

10. Drive means acording to claim 9, characterized in that the limiting travel speed is between 30 km/h and 55 km/h.

11. Drive means according to any of claims 7 to 10, characterised in that a crawling speed is provided by means of the additional drive when the shift lever of the speed-change gear (3) is in neutral position.

12. Drive means according to claim 11, characterized by a control device which prevents the additional drive being switched on above a limiting travel speed (limiting value $V_{Kmax}$).

13. Drive means according to claim 12, characterised in that the limiting travel speed is between 6 km/h and 12 km/h.

14. Drive means according to any of claims 11 to 13, characterized in that the fluid power pump (5) is blockable.

## Revendications

1. Dispositif de propulsion pour véhicules automobiles, notamment voitures particulières, avec une liaison mécanique d'entraînement entre le moteur du véhicule et les roues de l'un des essieux du véhicule, (essieu de propulsion), ainsi qu'avec un entraînement supplémentaire, susceptible d'être accouplé et désaccouplé, pour les roues de l'autre essieu du véhicule (essieu de propulsion auxiliaire), dispositif dans lequel cet entraînement supplémentaire revêt la forme d'un entraînement hydraulique de roue indépendante, entraînement dans lequel un moteur hydraulique est associé en tant que moteur d'entraînement supplémentaire à chacune des roues de l'essieu de propulsion supplémentaire, et ces moteurs hydrauliques sont reliés à au moins une pompe hydraulique commune, susceptible d'être entraînée par le moteur du véhicule et qui fournit à ces moteurs hydrauliques, l'énergie d'entraînement, dispositif caractérisé en ce que les moteurs hydrauliques (16, 17) sont des moteurs constants à pistons axiaux du type de construction à disques obliques et revêtent la forme de moteurs de moyeux de roues en étant respectivement disposés dans le moyeu (14, 15) des roues (12, 13) du véhicule, un embrayage étant respectivement prévu directement entre le moteur hydraulique (16, 17) et le moyeu (14, 15) de la roue (12, 13) du véhicule.

2. Dispositif de propulsion selon la revendication 1, caractérisé en ce que l'embrayage prévu entre le moteur hydraulique (16, 17) et le moyeu (14, 15) de la roue (12, 13) du véhicule, revêt la forme d'un embrayage (18, 19) actionné par un fluide sous pression.

3. Dispositif de propulsion selon la revendication 2, caractérisé en ce que l'embrayage (18, 19) est susceptible d'être actionné par le liquide hydraulique alimentant les moteurs hydrauliques (16, 17).

4. Dispositif de propulsion selon la revendication 1, 2 ou 3, caractérisé en ce qu'il est prévu une pompe hydraulique auxiliaire (8), qui est susceptible d'être entraînée par le moteur du véhicule indépendamment de la pompe hydraulique (5) et dont la sortie est susceptible d'être reliée au côté haute pression considéré du circuit hydraulique entre la pompe hydraulique (5) et les moteurs hydrauliques (16, 17).

5. Dispositif de propulsion selon la revendication 4, caractérisé en ce que le volume absorbé en commun par les moteurs hydrauliques (16, 17) est, tout au moins approximativement, identique au volume délivré par la pompe hydraulique (5) et une quantité supplémentaire pour l'entraînement des moteurs hydrauliques (16, 17) peut être obtenue par mise en circuit de la pompe hydraulique auxiliaire (8).

6. Dispositif de propulsion selon la revendication 4 ou 5, caractérisé en ce que la pompe hydraulique (5) est susceptible d'être couplée avec l'arbre de sortie (6) de la boîte de changement de vitesses (3), le couplage (7) des pompes hydrauliques étant susceptible d'être actionné hydrauliquement, tandis que la pompe hydraulique auxiliaire (8) est prévue pour l'alimentation sous pression du couplage (7) des pompes hydrauliques.

7. Dispositif de propulsion selon une des revendications 1 à 6, caractérisé en ce qu'il est prévu un dispositif électronique de commande qui exclut la mise en circuit de l'entraînement supplémentaire au-dessus d'une vitesse de déplacement limite (valeur limite $V_{Amax}$).

8. Dispositif de propulsion selon la revendication 7, caractérisé en ce que la vitesse de déplacement limite est inférieure à 80 km/h, de préférence inférieure à 60 km/h, et de préférence, notamment de 55 km/h.

9. Dispositif de propulsion selon la revendication 7 ou 8, caractérisé en ce qu'il est prévu un dispositif de commande qui exclut une mise en circuit de l'entraînement supplémentaire au-dessus d'une vitesse de déplacement limite (valeur limite $V_{bmax}$) dépendant de l'accélération du véhicule et au-dessus d'une déviation limite ($x_0$) de la pédale d'accélérateur.

10. Dispositif de propulsion selon la revendication 9, caractérisé en ce que la vitesse de déplacement limite se situe entre 30 km/h et 55 km/h.

11. Dispositif de propulsion selon une des revendications 7 à 10, caractérisé en ce qu il est prévu une vitesse tout terrain à l'aide de l'entraînement supplémentaire et pour une position nulle du levier de la boîte de changement de vitesse (3).

12. Dispositif de propulsion selon la revendication 11, caractérisé en ce qu'il comporte un dispositif de commande qui exclut une mise en circuit de l'entraînement supplémentaire au-dessus d'une vitesse de déplacement limite (valeur limite $V_{Kmax}$).

13. Dispositif de propulsion selon la revendication 12, caractérisé en ce que la vitesse de déplacement limite se situe entre 6 km/h et 12 km/h.

14. Dispositif de propulsion selon une des revendications 11 à 13, caractérisé en ce que la pompe hydraulique (5) est réalisée de façon à pouvoir être bloquée.

FIG.1

EP 0 230 022 B1

FIG.2

Signalflußplan   FIG. 3

(0)

Normalfahrt (Zust. 1 lt. Wahr. tab.)

(1)

Allrad = 1 — ja

Kriechgang = 1 — ja

$V < V_{Kmax}$ — ja

Ganghebelnullst = 1 — nein

(1)

v < 55 — nein

(1)

$V < V_{bmax}$ und $x + \dot{x} \cdot \Delta t < x_0$ — ja — ja

nein

(2)

Allrad vorbereiten Phase I (Zust. 4 lt. Wahr. tab.)

Einschaltverzö - gerung abwarten

(3)

Rückwärtsgang = 1 — ja

nein

(4)

Allrad vorwärts Phase II V einschalten (Zust. 5 lt. Wahr. tab.)

(5)

Allrad rückw. Phase II R einschalten (Zust. 6 lt. Wahr. tab.)

(6)

(7)

Allrad = 1 — ja

Allrad = 1 — ja

Rückwärtsg = 1 — nein

(4)

Rückwärtsgang = 1 — ja

(5)

nein

(8)

Allrad abschalten Phase I (Zust. 9 lt. Wahr. tab.)

Abschaltverzögerung

(0)

Kriechgang vorbe- reiten (Zust. 2 lt. Wahr. tab.)

Einschaltverzö - gerung abwarten

Kriechgang ein - schalten (Zust. 3 lt. Wahr. tab.)

(12)

Kriechgang = 1 — ja

$V < V_{Kmax}$ — ja — nein

(9)

Ganghebelnullst. = 1 — ja

(9) nein

Kriechgang ab - schalten Phase I wie (Zust. 9 lt. Wahr. tab.)

Abschalt - verzögerung

(0)

$V < V_{max}$ — ja

nein

$V < V_{bmax}$ und $x + \dot{x} \cdot \Delta t < x_0$ — ja

nein

(10)

(6)

Allrad abschalten in Bereitschaft (Zust. 7 bzw. 8 lt. Wahr. tab.)

(11)

Allrad = 1 — ja

nein

(8)

v < 50 — ja

(4)

nein

5

# FIG. 4

## Wahrheitstabelle

| | Zust Nr. | Eingangssignale für Elektronik | | | | | | Abge-leitete Signale | Signale für Ventile | | | | | | | |
|---|---|---|---|---|---|---|---|---|---|---|---|---|---|---|---|---|
| | | Allrad-taste A | Kriech-gang-taste K | Ganghebel-null-stellung N | Rück-wärts-gang R | Fahrzeug-geschw. V [km/h] | Gaspe-dal-stellung x | $\dfrac{dx}{dt}$ | Ventil 57 | Ventil 31 | Ventil 32 | Ventil 37 | Ventil 35 | Ventil 36 | Kupplung 9 | |
| Normalfahrt | 1 | 0 | 0 | beliebig | beliebig | beliebig | beliebig | | 0 | 0 | 0 | 0 | 0 | 0 | 0 | Variationsmoglichkeiten um 31,32 und 37 auf 1 setzen zu konnen |
| ⌐ Kriechgang vorbereiten | 2 | 0 | 1 | 1 | 0 | $0 \leq v \leq v_k$ | " | | 1K | 0 | 0 | 0 | 0 | 0 | 1 | Verzögerungszeit einstellbar 0...3 sec; |
| └ Nach Verzögerungszeit: Kriechgang einschalten | 3 | 0 | 1 | 1 | 0 | $0 \leq v \leq v_k$ | " | | 1K | 1 | 0 | 0 | entspr. Gaspedal-stellung 15..250bar | Einstellg. 15bar | 1 | $v_{max} \approx 6...12$ km/h einstellbar; |
| ⌐ Allrad vorbereiten Phase 1 (Pumpe einkuppeln) | 4 | 1 | 0 | beliebig | beliebig | $-55 \leq v \leq 55$ | $x < x_o$ | $\dot{x}\cdot\Delta t < x_o-x$ | 1A | 0 | 0 | 0 | 0 | 0 | 1 | Verzögerungszeit einstellbar 0...4sec; |
| └ Nach Verzögerungszeit: Allrad einschalten Ph. IIV (Motoren einkuppeln,Betr. vorw.) | 5 | 1 | 0 | " | 0 | $0 \leq v \leq 55$ | $x < x_o$ | " | 1A | 1 | 0 | 0 | entspr. Gaspedal-stellung 15..250bar | Einstellg 15bar | 1 | $x_o$ einstellbar von 10°..88° $V_{bmax}$ einstellbar von 30..55km/h |
| └ Allrad einschalten Phase IIR (Motoren einkuppeln,Betr. rückw.) | 6 | 1 | 0 | " | 1 | $-55 \leq v \leq 0$ | $x < x_o$ | " | 1A | 0 | 1 | 0 | Einstellg. 15bar | entspr. Gaspedal-stellung 15..250bar | 1 | Übergang von 4 nach 6 mit Verzögerung,von 5 nach 6 ohne Verzögerung |
| Allradabschaltung bei Vorwärts-Geschwindigkeits-überschreitung(Bereit-schaftsstellung Allrad) | 7 | 1 | 0 | " | 0 | $v > 55$ | beliebig | | 0 | 1 | 1 | 1 | 0 | 0 | 0 | Variationsmöglichkeit um Ventil 37 auf 0 zu setzen |
| Allradabschaltung bei Vorwärtsbeschleunigungsüber-schreitung(Bereitschafts-stellung Allrad) | 8 | 1 | 0 | " | 0 | $v > v_{bmax}$ | $x > x_o$ | $\dot{x}\cdot\Delta t > x_o-x$ | 0 | 1 | 1 | 1 | 0 | 0 | 0 | Variationsmöglichkeit um Ventil 37 auf 0 zu setzen;$x_o$ einstellbar 10°..88°; $V_{bmax}$ einstellbar 30..55km/h; |
| Allradabschaltung auf Kommando Phase I | 9 | 0 | 0 | " | beliebig | beliebig | beliebig | | 0 | 1 | 1 | 1 | 0 | 0 | 0 | Variationsmöglichkeit um Ventil 37 auf 0 zu setzen |
| └ Nach Verzögerungszeit: Kommando Phase II | 10 | Normalfahrtzustand | | | | | | | | | | | | | | Abschaltverzögerung einstellbar zwischen 0 und 20 sec |

EP 0 230 022 B1